# FASCICULE DE BREVET EUROPEEN

(11) **EP 1 585 655 B1**
(45) Date de publication et mention de la délivrance du brevet: **22.12.2010**
(21) Numéro de dépôt: 04703417.8
(22) Date de dépôt: 20.01.2004
(51) Int. Cl.: B60R 21/20

(54) **ENSEMBLE DE PLANCHE DE BORD DE VEHICULE AUTOMOBILE ADAPTE A UN DISPOSITIF DE SECURITE A SAC GONFLABLE, PROCEDE DE FABRICATION D'UN TEL ENSEMBLE, ET VEHICULE AUTOMOBILE COMPRENANT UN TEL ENSEMBLE**
AN EINER AIRBAG-SICHERHEITSVORRICHTUNG ANGEBRACHTE KRAFTFAHRZEUG-ARMATURENBRETTANORDNUNG, HERSTELLUNGSVERFAHREN DAVON UND SOLCH EINE ANORDNUNG UMFASSENDES KRAFTFAHRZEUG
MOTOR VEHICLE DASHBOARD ASSEMBLY WHICH IS FITTED TO AN AIRBAG SAFETY DEVICE, PRODUCTION METHOD THEREOF AND MOTOR VEHICLE COMPRISING ONE SUCH ASSEMBLY

(30) Priorité: 20.01.2003 FR 0300570
(43) Date de publication de la demande: 19.10.2005
(73) Titulaire: Faurecia Interieur Industrie, 92000 Nanterre (FR)
(72) Inventeur: BONDOERFFER, Marc, E-46182 LA CANADA (VALENCIA) (ES)
(74) Mandataire: Habasque, Etienne J. Jean-François
(86) Numéro de dépôt international: PCT/FR2004/000116
(87) Numéro de publication internationale: WO 2004/067336

(56) Documents cités:
- EP-A- 0 970 856
- US-B1- 6 250 669

## Description

L'invention concerne un ensemble de planche de bord de véhicule automobile comportant
- une partie de planche ayant une face interne ;
- un élément de guidage du déploiement du sac gonflable d'un dispositif de sécurité à sac gonflable, ledit élément de guidage étant fixé à la face interne et comprenant d'une part des parois formant canal de guidage prévues pour entourer au moins partiellement le dispositif de sécurité à sac gonflable, et d'autre part un rebord périphérique de fixation à la face interne de la partie de planche, qui délimite intérieurement une zone d'ouverture de la partie de planche et de passage du sac ; et
- un élément de liaison du dispositif de sécurité à la partie de planche, solidaire de la face interne de la partie de planche, et comprenant des moyens de fixation au dispositif de sécurité à sac gonflable.

On a déjà proposé dans l'état de la technique de fixer un dispositif de sécurité à sac gonflable, ou module « air-bag », aux parois de l'élément de guidage lui-même pour réaliser une liaison mécanique du module air-bag à la face interne de la partie de planche. Un tel agencement est par exemple décrit dans le document EP 0 970 856.

Un inconvénient majeur de ce type d'architecture découle du fait que le module air-bag présente généralement une inertie importante qui, du fait des phénomènes vibratoires apparaissant dans le véhicule, génère des contraintes mécaniques importantes sur son support. Ces contraintes, transmises par l'intermédiaire des parois du canal de guidage à la planche de bord, peuvent entraîner des déformations de celle-ci dans la zone de passage du sac délimitée par le rebord. Ces déformations peuvent être préjudiciables à une rupture homogène, lors du déploiement du sac, de la partie de planche de bord en regard du canal de guidage. Un tel défaut d'homogénéité de rupture peut se traduire par un déploiement incorrect du sac.

La présente invention a pour objet principal de résoudre cet inconvénient.

A cet effet, dans un ensemble de planche de bord selon l'invention, l'élément de liaison est distinct de l'élément de guidage, et fixé séparément à la partie de la palanche dans une zone périphérique extérieure audit rebord.

Grâce à cette disposition, par laquelle les fonctions de guidage et de liaison mécanique du module à la planche de bord sont dissociées, les contraintes de vibration issues du module air-bag sont transmises à la planche de bord dans une zone périphérique extérieure à la zone fonctionnelle constituée de la zone de passage du sac. Cette dernière est protégée de la propagation de ces contraintes vibratoires par le rebord périphérique faisant office de raidisseur.

Suivant d'autres caractéristiques de l'invention, prises seules ou selon toutes les combinaisons techniquement envisageables :
- la partie de planche de bord présente des lignes d'affaiblissement de matière coïncidant sensiblement avec une partie au moins de la périphérie du canal de guidage ;
- l'un au moins, et de préférence les deux, parmi l'élément de guidage et l'élément de liaison est (sont) fixé(s) à la face interne de la partie de planche par soudure, notamment par soudure.par vibration ;
- l'élément de liaison présente une face sensiblement plane et parallèle à là partie de planche à laquelle il est fixé, ladite face plane étant pourvue des moyens de fixation du dispositif de sécurité à sac gonflable ;
- l'ensemble comprend en outre un volet d'obturation du canal de guidage, dont une partie est montée pivotante sur l'élément de guidage et présente une surface supérieure fixée à la face interne de la partie de planche; et
- ladite surface supérieure est fixée à la face interne de la partie de planche par soudure, notamment par soudure par vibration.

L'invention vise également un procédé de fabrication d'un ensemble de planche de bord tel que décrit précédemment, ce procédé comprenant les étapes quai consistent à :
- fabriquer d'une pièce l'élément de guidage avec l'élément de liaison, et éventuellement avec le volet d'obturation ;
- séparer ledit élément de liaison dudit élément de guidage ; et
- fixer de façon séparée d'une part l'élément de guidage sur la partie de planche, et d'autre part l'élément de liaison sur la partie de planche.

Suivant d'autres caractéristiques, optionnelles, du procédé :
- l'élément de guidage, l'élément de liaison, et éventuellement le volet d'obturation sont fabriqués par moulage dans un même moule ;
- l'élément de guidage, l'élément de liaison, et éventuellement le volet d'obturation sont fixés en même temps, dans un même outillage, sur la partie de planche ;
- ledit outillage est un outillage de soudure par vibration ; et
- l'élément de guidage et l'élément de liaison sont séparés l'un de l'autre dans ledit outillage, préalablement à leur fixation sur la partie de planche.

Un mode de réalisation de l'invention va maintenant être décrit plus en détail en référence aux dessins annexés, sur lesquels :
- la Figure 1 est une vue partielle en perspective éclatée d'un ensemble de planche de bord conforme à l'invention, et d'un module air-bag ;
- la Figure 2 est une vue de section à plus grande échelle, dans un plan médian suivant la direction II-II, d'un ensemble conforme à l'invention et d'un module air-bag, tels qu'illustrés partiellement sur la Figure 1 ; et
- la Figure 3 est une vue de section partielle, dans un plan médian orthogonal, de l'ensemble de la Figure 1 selon la direction III-III.

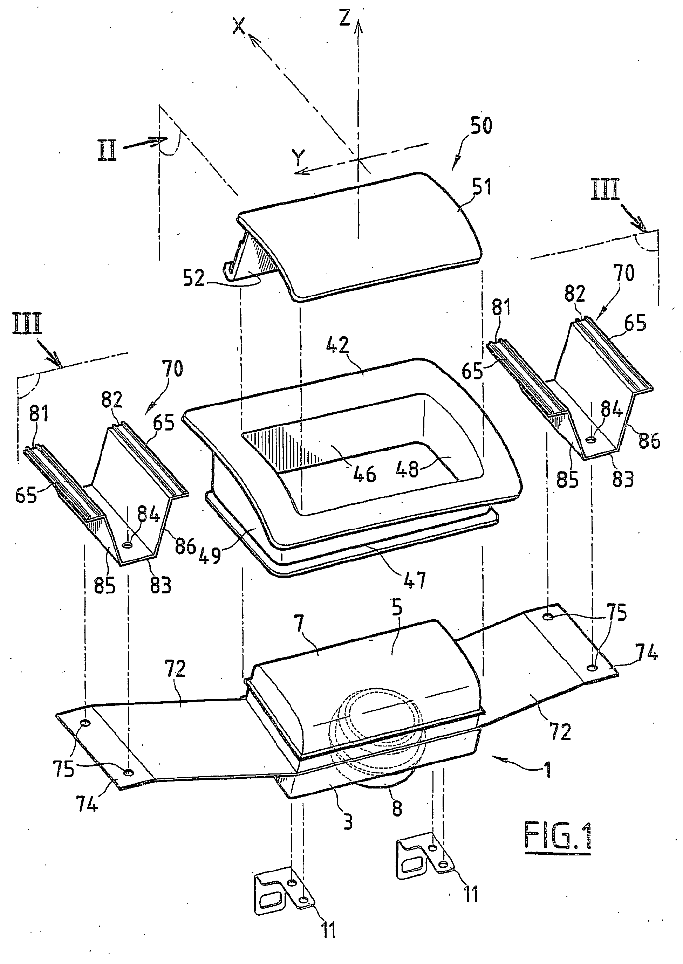

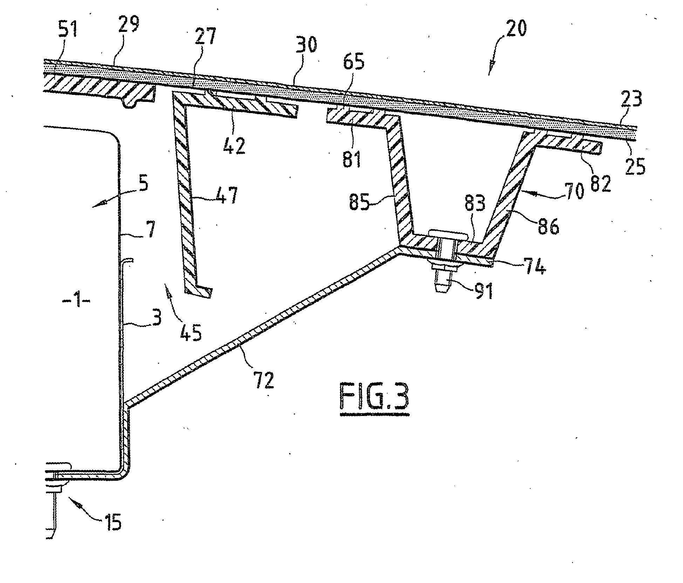

Sur les Figures 1 à 3, on a représenté, à des échelles différentes, un ensemble de planche de bord de véhicule automobile conforme à l'invention, et un dispositif de sécurité à sac gonflable, ou « module air-bag », associé.

Pour la commodité de la description, l'ensemble sera orienté suivant le système d'axes X, Y, Z, définissant de façon classique l'orientation d'un véhicule, et dans lequel l'axe X est l'axe longitudinal du véhicule orienté vers l'avant de ce dernier, l'axe Y est l'axe transversal du véhicule orienté vers la gauche du conducteur, et l'axe Z est l'axe vertical orienté vers le haut.

Le module air-bag 1 comprend un boîtier rigide 3 de forme sensiblement parallélépipédique, ouvert sur sa face supérieure 5.

Le module air-bag 1 comprend en outre un sac gonflable 7 et un générateur de gaz 8, agencés au moins partiellement à l'intérieur du boîtier 3. A l'état initial, le sac 7 est plié dans le boîtier 3 de façon à se déployer, lors du déclenchement, au travers de la face supérieure 5 du boîtier avec une vitesse et une direction optimales.

Le boîtier 3 est fixé rigidement à une pièce de structure 9 du véhicule, par l'intermédiaire de deux pattes de fixation métalliques 11. Les pattes métalliques 11 sont fixées d'une part au boîtier 3, et d'autre part à la pièce de structure 9, par des ensembles vis-écrous respectifs 15, 16.

Ainsi fixé sur la pièce de structure 9, le module air-bag 1 s'étend au-dessous d'une partie 20 de planche de bord, en étant masqué par cette dernière vis-à-vis des occupants du véhicule.

L'ensemble de planche de bord objet de l'invention comprend la partie de planche de bord 20 qui comprend elle-même
- une peau extérieure d'habillage 23, par exemple réalisée en PVC (thermoplastique polychlorure de vinyle), en TPO (thermoplastique polyoléfine) ou en TPU (thermoplastique polyuréthane), ou en tout autre matériau thermoplastique permettant de réaliser une peau souple, et
- une couche intérieure 25 dont la surface extérieure est recouverte par la peau 23, et qui est réalisée par exemple en polypropylène chargé de fibres pour conférer à la partie de planche 20 une rigidité structurelle. Une ligne de moindre résistance 27, ou ligne d'affaiblissement, est ménagée dans la partie de planche 20, et délimite une région 29 de recouvrement du module 1, et une région périphérique 30 entourant la région de recouvrement 29.

La région de recouvrement 29 a un contour correspondant sensiblement à celui de la surface supérieure 5 du module 1, et s'étend en regard de celle-ci. La région de recouvrement 29 définit une zone d'ouverture de la partie planche 20 et de passage du sac 7 lors du déclenchement du dispositif.

L'ensemble de planche de bord comprend en outre une structure 40 de renfort de la région périphérique 30, qui forme un élément de guidage du déploiement du sac 7 lors du déclenchement du dispositif de sécurité. La structure de renfort 40 comprend en effet un cadre galbé 42, ou rebord périphérique, qui épouse sensiblement la forme de la région périphérique 30 au voisinage de la ligne d'affaiblissement 27, et un canal 45 formé de parois 46, 47, 48, 49 qui font saillie vers le bas et vers l'avant du cadre 42 depuis ses bords intérieurs 50. Le cadre 42 est fixé, par exemple par soudure par vibration, à la face interne de la couche intérieure 25,

Ainsi, les parois latérales 46, 47, 48, 49 du canal 45 coïncident sensiblement avec la ligne d'affaiblissement 27, et débouchent sur l'ouverture qui sera formée dans la partie de planche de bord 20 lors du déploiement du sac 7. Dans l'exemple représenté, la section transversale du canal 45, c'est-à-dire la section dans un plan sensiblement orthogonal à la direction principale du canal correspondant à la direction principale de déploiement du sac 7, est sensiblement rectangulaire.

L'élément de guidage 40 et le module air-bag 1 sont conçus et montés, respectivement sur la partie de planche 20 et la pièce de structure 9, de telle sorte que la face supérieure 5 du boîtier 3 s'étende à l'intérieur du canal 45, tournée vers la région de recouvrement 29.

L'ensemble de planche de bord comprend un volet 50 d'obturation du canal 45 et de renfort de la région de recouvrement 29. Ce volet 50 possède essentiellement un panneau 51 fixé, par exemple par soudure par vibration, sur la face interne de la région de recouvrement 29 de la partie de planche 20, en épousant la forme de cette dernière, et une paroi 52 de fixation du volet 50 au canal 45. Le volet 50 est également pourvu d'un élément de charnière 53 reliant le panneau 51 à la paroi de fixation 52, ledit élément de charnière 53 étant formé par exemple d'une bande de matière relativement souple permettant au panneau 51, lors du déploiement du sac 7, de pivoter par rapport à la paroi de fixation 52 en ouvrant le canal 45. L'élément de charnière 53 est également susceptible de s'étirer ou de se déplier de façon à permettre l'extraction complète du panneau 51 hors du canal 45.

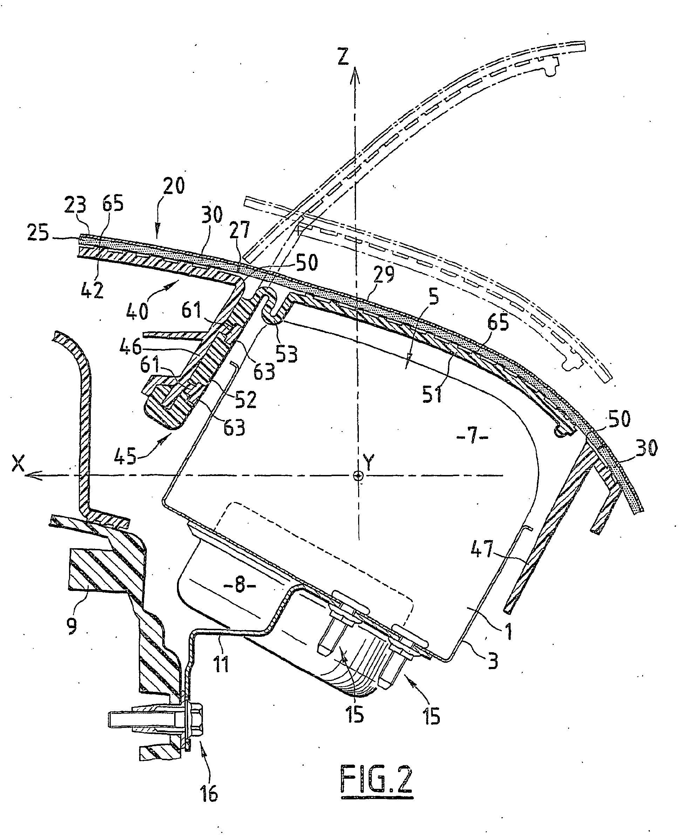

Les positions du panneau 51, de la surface de recouvrement 29, et de l'élément de charnière 53, au cours de deux étapes successives du déploiement du sac 7, ont été représentées respectivement en traits mixtes sur la Figure 2.

La paroi avant 46 du canal 45 possède des reliefs 61 d'accrochage de la paroi de fixation 52, sous forme de tétons munis de têtes élargies 63. Ces tétons 61 font saillie depuis la paroi 46 vers l'intérieur du canal 45.

En variante, le volet 50 pourra être réalisé d'une pièce avec la structure de renfort 40, notamment d'une pièce en matière plastique réalisée par moulage par injection. A titre d'exemple, la matière plastique peut être du polypropylène chargé de fibres de verre.

Comme indiqué précédemment, le cadre 42 de la structure de renfort 40 et le panneau 51 du volet 50 peuvent être fixés sur la couche intérieure 25 de la partie de planche 20 au moyen d'une opération de soudage par vibration. Les soudures peuvent être réalisées le long de nervures 65 prévues sur la face extérieure respectivement du cadre 42 et du panneau 51.

L'ensemble de planche de bord comprend enfin une paire d'éléments 70 de liaison du boîtier 3 à la partie de planche 20, adaptés pour être fixés à des pattes respectives 72 de fixation, solidaires du boîtier 3 du module air-bag.

Dans l'exemple représenté, chaque patte 72 est fixée au boîtier 3 par boulonnage en deux points, au niveau d'une paroi latérale respective, et fait saillie de celle-ci vers le haut de façon oblique. Les deux pattes 72 s'étendent sensiblement symétriquement par rapport à un plan médian vertical XZ du boîtier 3, essentiellement dans la direction transversale Y. Chaque patte de fixation 72 est pourvue d'une plaquette 74 d'extrémité libre, pourvue par exemple de deux trous 75 de fixation sur l'élément de liaison 70.

Chaque élément de liaison 70 se présente comme une bande pliée en créneau, et qui présente deux plaques d'extrémité 81, 82 sensiblement coplanaires, dont la surface supérieure est fixée sur la surface interne de la région périphérique 30, en épousant la forme de la couche intérieure 25.

La surface supérieure des plaques d'extrémité 81, 82 est pourvue de nervures 65, de telle sorte que la fixation de l'élément de liaison 70 sur la partie de planche 20 puisse être réalisée par soudure par vibration le long de ces nervures.

Chaque élément de liaison 70 comprend en outre une plaque centrale 83 sensiblement parallèle aux plaques d'extrémité 81, 82, décalée verticalement vers le bas par rapport à celles-ci, et reliée à chacune des plaques d'extrémité 81, 82 par une plaque intermédiaire 85, 86 respective, sensiblement verticale. L'élément de liaison 70 est dans l'exemple représenté sensiblement symétrique par rapport à un plan médian pratiquement confondu avec un plan XZ.

La plaque centrale 83 est pourvue de deux trous de fixation 84 correspondant à ceux 75 de la plaquette d'extrémité 74, permettant la fixation de la patte 72 sur l'élément de liaison 70, par exemple par une paire d'ensembles vis-écrous 91.

Il va de soi que tout type de fixation adapté est également envisageable, par exemple des fixations par clippage ou par rivetage.

Les éléments de liaison 70 sont des pièces séparées de l'élément de guidage 40. Ils sont fixés à la partie de planche 20 dans une zone périphérique extérieure au cadre 42, chacun étant disposé du côté de l'une respective des deux parois latérales opposées 48, 49 de l'élément de guidage 40, et espacé par rapport à ladite paroi.

Les éléments de liaison 70 pourraient également être réalisés d'une pièce avec un cadre fixé sur la partie de planche 20, entourant le cadre 42.

On comprend que, grâce à l'invention qui vient d'être décrite, on assure une fixation du module 1 par rapport à la partie de planche 20, et par rapport au canal 45 et à l'ouverture délimitée par les lignes d'affaiblissement 27, fixation qui transmet les efforts mécanique et les vibrations du module vers la partie de planche de bord 20, extérieurement par rapport à la sortie du canal 45. La région de recouvrement 29 est protégée des déformations dues notamment aux vibrations du module air-bag 1 grâce à la structure de renfort 40.

On va maintenant décrire un mode de réalisation préféré d'un procédé de fabrication d'un ensemble de planche de bord tel que décrit précédemment.

Dans une première étape du procédé de fabrication, on réalise la structure de renfort 40, l'élément de liaison 70, et éventuellement le volet 50, en une seule pièce, de préférence par moulage dans un même moule. Ces pièces seront de préférence réalisées dans un même matériau thermoplastique. En variante, ces pièces pourraient être réalisées dans des matériaux différents au cours d'une première opération de moulage suivie d'opérations secondaires de surmoulage.

Dans une deuxième opération, on procède à la séparation de l'élément de liaison 70 de l'ensemble formé par la structure dé renfort 40 et le volet 50.

Dans une troisième opération du procédé, on fixe la structure de renfort 40, le volet 50, et l'élément de liaison 70, sur la face interne de la partie de planche 20, c'est-à-dire sur la face interne de la couche 25. La fixation de l'élément de liaison 70 d'une part, et de l'ensemble formé de la structure de renfort 40 et du volet 50 d'autre part, est réalisée de façon séparée. On entend par ce terme « séparée » que la fixation des trois pièces n'est pas réalisée par l'intermédiaire d'une pièce ou d'une couche de matériau commune. Cette disposition vise à ce que d'éventuelles contraintes mécaniques issues de la structure de renfort 40 et de l'élément de liaison 70 soient transmises à la partie de planche 20 par des cheminements distincts.

De préférence, les trois pièces 40, 50, 70 sont fixées à la partie de planche 20 par soudure par vibration.

Avantageusement, l'élément de liaison 70 est séparé de la structure de renfort 40 à l'intérieur d'un outillage de soudure par vibration, et les deux pièces 40, 70, avec éventuellement le volet 50, sont soudées à la couche 25 au cours d'une opération unique, au moyen du même outillage. Le soudage de la structure de renfort 40, de l'élément de liaison 70, et éventuellement du volet 50, est donc effectué simultanément.

Une fois réalisé l'ensemble de planche de bord, qui comprend la partie de planche 20, la structure de renfort 40, le volet 50, et l'élément de liaison 70, le module air-bag 1 peut être fixé sur la pièce de structure 9, puis être fixé à la partie de planche 20 par l'intermédiaire des éléments de liaison 70 et des pattes de fixation 72.

## Revendications

1. Ensemble de planche de bord de véhicule automobile comportant
- une partie de planche (20) ayant une face interne ;
- un élément (40) de guidage du déploiement du sac gonflable (7) d'un dispositif de sécurisé à sac gonflable (1), ledit élément de guidage (40) étant fixé à la face interne et comprenant d'une part des parois (46, 47, 48, 49) formant canal de guidage (45) prévues pour entourer au moins partiellement le dispositif de sécurité à sac gonflable (1), et d'autre part un rebord périphérique (42) de fixation à la face interne de la partie de planche (20), qui délimite intérieurement une zone d'ouverture de la partie de planche et de passage du sac (7); et
- un élément de liaison (70) du dispositif de sécurité (1) à la partie de planche(20), solidaire de la face interne de la partie de planche (20), et comprenant des moyens (91) de fixation au dispositif de sécurité à sac gonflable (1),
**caractérisé en ce que** ledit élément de liaison (70) est distinct et separé de l'élément de guidage (40), et fixé séparément à la partie de planche dans une zone périphérique extérieure audit rebord (42).

2. Ensemble de planche de bord suivant la revendication 1, **caractérisé en ce que** la partie de planche de bord (20) présente des lignes (27) d'affaiblissement de matière coïncidant sensiblement avec une partie au moins de la périphérie (50) du canal de guidage (45).

3. Ensemble de planche de bord suivant la revendication 1 ou 2, **caractérisé en ce que** l'un au moins, et de préférence les deux, parmi l'élément de guidage (40) et l'élément de liaison (70) est (sont) fixé (s) à la face interne de la partie de planche (20) par soudure, notamment par soudure par vibration.

4. Ensemble de planche de bord suivant l'une quelconque des revendications 1 à 3, **caractérisé en ce que** l'élément de liaison (70) présente une face (83)sensiblement plane et parallèle à la partie de planche (20) à laquelle il est fixé, ladite face plane (83) étant pourvue des moyens (91) de fixation du dispositif de sécurité à sac gonflable (1).

5. Ensemble de planche de bord suivant l'une quelconque des revendications 1 à 4, **caractérisé en ce qu'**il comprend en outre un volet (50) d'obturation du canal de guidage (45), dont une partie (51) est montée pivotante sur l'élément de guidage (40) et présente une surface supérieure fixée à la face interne de la partie de planche (20).

6. Ensemble de planche de bord suivant la revendication 5, **caractérisé en ce que** ladite surface supérieure est fixée à la face interne de la partie de planche (20) par soudure, notamment par soudure par vibration.

7. Procédé de fabrication d'un ensemble de planche de bord selon l'une quelconque des revendications 1 à 6, **caractérisé en ce qu'**il comprend les étapes consistant à :
- fabriquer d'une pièce l'élément de guidage (40) avec l'élément de liaison (70);
- séparer ledit élément de liaison (70) dudit élément de guidage (40); et
- fixer de façon séparée d'une part l'élément de guidage (40) sur la partie de planche (20), et d'autre part l'élément de liaison (70) sur la partie de planche (20).

8. Procédé de fabrication d'un ensemble de planche de bord selon la revendication 7, **caractérisé en ce que** l'élément de guidage (40) et l'élément de liaison (70) sont fabriqués par moulage dans un même moule.

9. Procédé de fabrication d'un ensemble de planche de bord selon la revendication 7 ou 8, **caractérisé en ce que** l'élément de guidage (40) et l'élément de liaison (70) sont fixés en même temps, dans un même outillage, sur la partie de planche (20).

10. Procédé de fabrication d'un ensemble de planche de bord selon la revendication 9, **caractérisé en ce que** ledit outillage est un outillage de soudure par vibration.

11. Procédé de fabrication d'un ensemble de planche de bord selon la revendication 9 ou 10, **caractérisé en ce que** l'élément de guidage (40) et l'élément de liaison (70) sont séparés l'un de l'autre dans ledit outillage, préalablement à leur fixation sur la partie de planche (20).

12. Procédé de fabrication d'un ensemble de planche de bord selon la revendication 5 ou 6, ledit ensemble étant conforme à l'une quelconque des revendications 7 à 11, **caractérisé en ce qu'**il comprend en outre l'étape consistant à fabriquer d'une pièce l'élément de guidage (40) et le volet d'obturation (50).

13. Procédé de fabrication d'un ensemble de planche de bord selon la revendication 12, **caractérisé en ce que** le volet d'obturation (50) et l'élément de guidage (40) sont fabriqués par moulage dans un même moule.

14. Procédé de fabrication d'un ensemble de planche de bord selon la revendication 12 ou 13, **caractérisé en ce que** l'élément de guidage (40) et le volet d'obturation (50) sont fixés en même temps, dans un même outillage, sur la partie de planche (20).

15. Véhicule automobile comprenant un dispositif de sécurité à sac gonflable, et un ensemble de planche de bord conforme à l'une quelconque des revendications 1 à 6.

## Claims

1. Motor vehicle instrument panel unit comprising:
- a panel part (20) having an inner face;
- an element (40) for guiding the deployment of the inflatable bag (7) of an inflatable bag-type safety device (1), the said guide element (40) being fastened to the inner face and comprising, on the one hand, walls (46, 47, 48, 49) that form a guide duct (45) and are designed to at least partially surround the inflatable bag-type safety device (1) and, on the other hand, a peripheral rim (42) for fastening to the inner face of the panel part (20), which rim delimits, internally, a zone for opening said panel part and for the bag (7) to pass through; and
- an element (70) for linking the safety device (1) to the panel part (20), which element is integral with the inner face of said panel part (20) and comprises means (91) for fastening to the inflatable bag-type safety device (1);
**characterised in that** the said linking element (70) is distinct and separate from the guide element (40) and is fastened separately to the panel part in a peripheral zone outside the said rim (42).

2. Instrument panel unit according to claim 1, **characterised in that** the instrument panel part (20) has material-weakening lines (27) that substantially coincide with at least part of the periphery (50) of the guide duct (45).

3. Instrument panel unit according to claim 1 or 2, **characterised in that**, of the guide element (40) and the linking element (70), at least one, and preferably both, is/are fastened to the inner face of the panel part (20) by welding, especially by vibration welding.

4. Instrument panel unit according to any of claims 1 to 3, **characterised in that** the linking element (70) has a face (83) which is substantially flat and parallel to the panel part (20) to which it is fastened, the said flat face (83) being provided with the means (91) for fastening the inflatable bag-type safety device (1).

5. Instrument panel unit according to any of claims 1 to 4, **characterised in that** it further comprises a flap (50) for occluding the guide duct (45), a part (51) of which flap is mounted in a pivoting manner on the guide element (40) and has an upper surface which is fastened to the inner face of the panel part (20).

6. Instrument panel unit according to claim 5, **characterised in that** the said upper surface is fastened to the inner face of the panel part (20) by welding, especially by vibration welding.

7. Method of manufacturing an instrument panel unit according to any of claims 1 to 6, **characterised in that** it comprises the stages which consist in:
- manufacturing the guide element (40) in one piece with the linking element (70);
- separating the said linking element (70) from the said guide element (40); and
- separately fastening, on the one hand, the guide element (40) onto the panel part (20) and, on the other hand, the linking element (70) onto said panel part (20).

8. Method of manufacturing an instrument panel unit according to claim 7, **characterised in that** the guide element (40) and the linking element (70) are manufactured by moulding in the same mould.

9. Method of manufacturing an instrument panel unit according to claim 7 or 8, **characterised in that** the guide element (40) and the linking element (70) are fastened onto the panel part (20) at the same time and in the same tool.

10. Method of manufacturing an instrument panel unit according to claim 9, **characterised in that** the said tool is a vibration welding tool.

11. Method of manufacturing an instrument panel unit according to claim 9 or 10, **characterised in that** the guide element (40) and the linking element (70) are separated from one another in the same tool, prior to being fastened onto the panel part (20).

12. Method of manufacturing an instrument panel unit according to claim 5 or 6, the said unit being in conformity with any of claims 7 to 11, **characterised in that** it further comprises the stage consisting in manufacturing the guide element (40) and the occluding flap (50) in one piece.

13. Method of manufacturing an instrument panel unit according to claim 12, **characterised in that** the occluding flap (50) and the guide element (40) are manufactured by moulding in the same mould.

14. Method of manufacturing an instrument panel unit according to claim 12 or 13, **characterised in that** the guide element (40) and the occluding flap (50) are fastened onto the panel part (20) at the same time and in the same tool.

15. Motor vehicle comprising an inflatable bag-type safety device (1), and an instrument panel unit in conformity with any of claims 1 to 6.

## Patentansprüche

1. Kraftfahrzeug-Armaturenbrettanordnung, umfassend:
- einen Brettteil (20) mit einer Innenseite;
- ein Element (40) zur Führung der Auffaltung des Airbag (7) einer Airbag-Sicherheitsvorrichtung (1), wobei das Führungselement (40) an der Innenseite befestig ist und einerseits Wände (46, 47, 48, 49), die einen Führungskanal (45) bilden, die dazu vorgesehen sind, mindestens zum Teil die Airbag-Sicherheitsvorrichtung (1) zu umgeben, und andererseits eine periphere Randleiste (42) zur Befestigung an der Innenseite des Brettteils (20), welche innen eine Öffnungszone des Brettteils und eine Durchtrittszone des Airbag (7) begrenzt, umfasst; und
- ein Verbindungselement (70) der Sicherheitsvorrichtung (1) mit dem Brettteil (20), das mit der Innenseite des Brettteils (20) aus einem Stück besteht und Mittel (91) zur Befestigung an der Airbag-Sicherheitsvorrichtung (1) umfasst,
**dadurch gekennzeichnet, dass** das Verbindungselement (70) von dem Führungselement (40) verschieden und getrennt ist, und getrennt an dem Brettteil in einer peripheren Zone außerhalb der Randleiste (42) befestigt ist.

2. Armaturenbrettanordnung nach Anspruch 1, **dadurch gekennzeichnet, dass** der Armaturenbrettteil (20) Materialschwächungslinien (27) aufweist, die im Wesentlichen mit einem Teil von mindestens der Peripherie (50) des Führungskanals (45) zusammentreffen.

3. Armaturenbrettanordnung nach Anspruch 1 oder 2, **dadurch gekennzeichnet, dass** mindestens eines und vorzugsweise beide des Führungselements (40) und des Verbindungselements (70) an der Innenseite des Brettteils (20) durch Schweißen, insbesondere durch Vibrationsschweißen, befestigt ist (sind).

4. Armaturenbrettanordnung nach einem der Ansprüche 1 bis 3, **dadurch gekennzeichnet, dass** mindestens das Verbindungselement (70) eine Seite (83) aufweist, die im Wesentlichen eben und zu dem Brettteil (20), an dem sie befestigt ist, parallel ist, wobei die ebene Seite (83) mit Mitteln (91) zur Befestigung der Airbag-Sicherheitsvorrichtung (1) vorgesehen ist.

5. Armaturenbrettanordnung nach einem der Ansprüche 1 bis 4, **dadurch gekennzeichnet, dass** sie weiterhin eine Klappe (50) zum Verschließen des Führungskanals (45) umfasst, dessen einer Teil (51) schwenkbar auf dem Führungselement (40) montiert ist und eine obere Fläche aufweist, die an der Innenseite des Brettteils (20) befestigt ist.

6. Armaturenbrettanordnung nach Anspruch 5, **dadurch gekennzeichnet, dass** die obere Fläche an der Innenseite des Brettteils (20) durch Schweißen, insbesondere durch Vibrationsschweißen, befestigt ist.

7. Verfahren zur Herstellung einer Armaturenbrettanordnung nach einem der Ansprüche 1 bis 6, **dadurch gekennzeichnet, dass** es die Schritte umfasst, die bestehen aus:
- Herstellen des Führungselements (40) mit dem Verbindungselement (70) aus einem Stück;
- Trennen des Verbindungselements (70) von dem Führungselement (40); und
- Befestigen einerseits des Führungselements (40) an dem Brettteil (20) und andererseits des Verbindungselements (70) an dem Brettteil (20) auf getrennte Art und Weise.

8. Verfahren zur Herstellung einer Armaturenbrettanordnung nach Anspruch 7, **dadurch gekennzeichnet, dass** das Führungselement (40) und das Verbindungselement (70) durch Pressformen in ein und derselben Form hergestellt werden.

9. Verfahren zur Herstellung einer Armaturenbrettanordnung nach Anspruch 7 oder 8, **dadurch gekennzeichnet, dass** das Führungselement (40) und das Verbindungselement (70) gleichzeitig, in ein und demselben Arbeitsgerät, an dem Brettteil (20) befestigt werden.

10. Verfahren zur Herstellung einer Armaturenbrettanordnung nach Anspruch 9, **dadurch gekennzeichnet, dass** das Arbeitsgerät ein Arbeitsgerät zum Vibrationsschweißen ist.

11. Verfahren zur Herstellung einer Armaturenbrettanordnung nach Anspruch 9 oder 10, **dadurch gekennzeichnet, dass** das Führungselement (40) und das Verbindungselement (70) in dem Arbeitsgerät vor ihrer Befestigung an dem Brettteil (20) voneinander getrennt werden.

12. Verfahren zur Herstellung einer Armaturenbrettanordnung nach Anspruch 5 oder 6, wobei die Anordnung konform ist mit einem der Ansprüche 7 bis 11, **dadurch gekennzeichnet, dass** es weiterhin den Schritt umfasst, bestehend aus der Herstellung des Führungselements (40) und der Verschlussklappe (50) aus einem Stück.

13. Verfahren zur Herstellung einer Armaturenbrettanordnung nach Anspruch 12, **dadurch gekennzeichnet, dass** die Verschlussklappe (50) und das Führungselements (40) durch Pressformen in ein und derselben Form hergestellt werden.

14. Verfahren zur Herstellung einer Armaturenbrettanordnung nach Anspruch 12 oder 13, **dadurch gekennzeichnet, dass** das Führungselement (40) und die Verschlussklappe (50) gleichzeitig, in ein und demselben Arbeitsgerät, an dem Brettteil (20) befestigt werden.

15. Kraftfahrzeug, umfassend eine Airbag-Sicherheitsvorrichtung und eine Armaturenbrettanordnung nach einem der Ansprüche 1 bis 6.
